# EUROPÄISCHE PATENTANMELDUNG

(11) **EP 4 113 754 A1**
(43) Veröffentlichungstag der Anmeldung: **04.01.2023**
(21) Anmeldenummer: 22156927.0
(22) Anmeldetag: 16.02.2022
(51) Int. Cl.: H01R 13/52, B60R 16/02, H02G 3/22, F16L 5/14, F16L 3/123, F16L 25/00, F16L 41/08, H02G 3/04, H02G 3/06

(54) **LEITUNGSDURCHFÜHRUNG ZUR FÜHRUNG EINER LEITUNG**

(30) Priorität: 01.07.2021 DE 102021117010
(71) Anmelder: CLAAS Selbstfahrende Erntemaschinen GmbH, 33428 Harsewinkel (DE)
(72) Erfinder: Krämer, Norbert, 33428 Harsewinkel (DE)
(74) Vertreter: CLAAS Gruppe

(57) **Zusammenfassung**

Die Erfindung betrifft eine Leitungsdurchführung (1) zur Führung einer Leitung durch ein Raumbegrenzungselement (2), umfassend einen Grundkörper (3), wobei der Grundkörper (3) von einer Ausnehmung (4) durchdrungen ist, die umlaufend von dem Grundkörper (3) eingefasst ist. Um die Schallübertragung zu verringern ist es gemäß der Erfindung vorgesehen, dass der Grundkörper (3) an einer inneren Mantelfläche (5) am Übergang zur Ausnehmung (4) eine Vielzahl von radial nach innen vorstehenden, umlaufenden, in Richtung einer Längsachse (6) der Ausnehmung (4) in Reihe hintereinander angeordneten Innenrippen (7) aufweist, wobei jeweils benachbarte Innenrippen (7) gemeinsam eine innere Ringnut (8) begrenzen.

## Beschreibung

Die vorliegende Anmeldung betriff eine Leitungsdurchführung zur Führung einer Leitung durch ein Raumbegrenzungselement gemäß dem Oberbegriff von Anspruch 1. Weiterhin betrifft die vorliegende Anmeldung eine Kabine einer landwirtschaftlichen Arbeitsmaschine gemäß dem Oberbegriff von Anspruch 13.

Die Leitungsdurchführung umfasst einen Grundkörper, der von einer Ausnehmung durchdrungen ist, die umlaufend von dem Grundkörper eingefasst ist.

Als Raumbegrenzungselemente, durch die eine oder mehrere Leitungen zu führen sind, werden gemäß der vorliegenden Anmeldung sämtliche Wandungen angesehen, die einen Raum begrenzen, beispielsweise die Wandungen einer Fahrerkabine eines Fahrzeugs oder einer landwirtschaftlichen Arbeitsmaschine.

Leitungsdurchführungen der vorstehend beschriebenen Art sind im Stand der Technik bereits bekannt. Beispielsweise beschreibt die DE 20 2016 102 878 U1 eine Kabeltülle aus einem Kunststoffmaterial, wobei die Kabeltülle einen Grundkörper mit einer Öffnung zur Durchführung von Kabeln besitzt. Um das Einführen der Kabel zu ermöglichen beziehungsweise zu vereinfachen weist die Kabeltülle eine in Längsrichtung verlaufende Schlitzung auf, die ein Aufbiegen der Kabelhülle und somit eine gewisse Aufweitung der Öffnung ermöglicht.

Die zuvor beschriebene Kabeltülle ist jedoch in Bezug auf Schallschutz nachteilig, so dass sie sich nicht für Anwendungsfälle eignet, die einen gewissen oder erhöhten Schallschutz erfordern.

Der vorliegenden Anmeldung liegt nunmehr die Aufgabe zugrunde, eine Leitungsdurchführung im Hinblick auf verbesserten Schallschutz zu optimieren.

Die zugrunde liegende Aufgabe wird erfindungsgemäß mit einer Leitungsdurchführung mit den Merkmalen des Anspruchs 1 gelöst. Vorteilhafte Ausgestaltungen ergeben sich aus den zugehörigen Unteransprüchen.

Die erfindungsgemäße Leitungsdurchführung ist dadurch gekennzeichnet, dass der Grundkörper an einer inneren Mantelfläche am Übergang zur Ausnehmung eine Vielzahl von radial nach innen vorstehenden, umlaufenden, in Richtung einer Längsachse der Ausnehmung in Reihe hintereinander angeordneten Innenrippen aufweist, wobei jeweils benachbarte Innenrippen gemeinsam eine innere Ringnut begrenzen. Die Innenrippen können insbesondere nach Art eines Rings in sich geschlossen ausgebildet sein. Die Leitungsdurchführung kann insbesondere als Wellrohrabschnitt ausgestaltet sein.

Die erfindungsgemäße Leitungsdurchführung bringt viele Vorteile mit sich. Durch die radial nach innen vorstehenden Innenrippen werden die Luftspalte zwischen der erfindungsgemäßen Leitungsdurchführung und einer darin angeordneten Leitung verringert, so dass sich die Schalldämmung erhöht. Eine besonders gute Schallisolierung wird erreicht, wenn die Innenrippen an einer Oberfläche der in der Leitungsdurchführung geführten Leitung zur Anlage kommen, da somit keine Luftspalte mehr vorliegen. Hier ergibt sich als weiterer Vorteil, dass die Leitungsdurchführung aufgrund der Anlage der Innenrippen in ihrer Lage gehalten wird und somit nicht verrutscht. Darüber hinaus ist auf diese Weise eine verbesserte Wasserundurchlässigkeit gegeben, und zwar zumindest eine gewisse, vorzugsweise eine vollständige, Dichtigkeit gegen Spritzwasser und/oder anstehendes Wasser.

Die vorgenannten positiven Effekte werden insbesondere bei der Führung einer Leitung weiter verbessert, die von einem Wellrohr umgeben ist. Typischerweise kann auch eine Mehrzahl von Leitungen in einem Wellrohr zusammengefasst sein. Ein Wellrohr besitzt ein äußeres Wellenprofil mit einem wellenförmig wechselnden Außendurchmesser und hat somit eine Oberflächenstruktur mit Hochbereichen und Rillen (Tiefbereichen). Demnach ist die erfindungsgemäße Leitungsdurchführung für Wellenrohre besonders vorteilhaft, da ein Wellrohr so in der Leitungsdurchführung positioniert werden kann, dass die Hochbereiche mit den inneren Ringnuten und die Rillen mit den Innenrippen korrespondieren. Auf diese Weise liegen die Hochbereiche des Wellrohres in den Ringnuten und die Innenrippen der Leitungsdurchführung in den Rillen des Wellrohres. Auf diese Weise kann eine deutlich verbesserte Schalldämmung erzielt werden, die weiter erhöht werden kann, indem die Abmessungen der Innenrippen und der Ringnuten der Leitungsdurchführung an die Außenabmessungen eines Wellrohrs derart angepasst sind, dass die Innenrippen eine Oberfläche des Wellrohres im Bereich der Rillen berühren.

Es versteht sich, dass die Abmessungen der Leitungsdurchführung an verschiedene Gegebenheiten angepasst werden kann, insbesondere an die die Dicke der zu führenden Leitungen oder Wellrohre.

In einer vorteilhaften Ausgestaltung der erfindungsgemäßen Leitungsdurchführung ist vorgesehen, dass der Grundkörper von einem dauerelastischen Material, insbesondere von Weichplastik, gebildet ist. Beispielsweise kann der Grundkörper aus Weich-PVC oder Polyethylen bestehen. Weichplastik lässt sich elastisch verformen, so dass das Einführen einer Leitung in die Ausnehmung des Grundkörpers erleichtert ist. Wenn die Leitung von einem Wellrohr umgeben wird, ist ferner das genaue Positionieren des Wellrohres mit seinen Hochbereichen, die den Ringnuten zugeordnet werden müssen, einfacher möglich. Eine präzise Positionierung begünstigt zudem den stabilen Sitz der Leitung sowie eine gute Schalldämmung sowie Wasserundurchlässigkeit. Ferner kann sich das Material des Grundkörpers aufgrund seiner weichen Struktur besonders dicht an die jeweilig durch die Ausnehmung geführte Leitung anlegen und auf diese Weise Spalte, die den Durchtritt von Schallwellen begünstigen würden, vermeiden.

Die erfindungsgemäße Leitungsdurchführung weiter ausgestaltend ist vorgesehen, dass der Grundkörper an einer äußeren Mantelfläche mindestens eine radial nach außen vorstehende Dichtlippe aufweist. Diese Dichtlippe dient zur Anlage an dem Raumbegrenzungselement, wodurch sich auch an der Schnittstelle zwischen dem Raumbegrenzungselement und der Leitungsdurchführung die positiven Effekte im Hinblick auf die verbesserte Schalldämmung und Wasserundurchlässigkeit ergeben.

In einer vorteilhaften Weiterbildung der Erfindung besitzt der Grundkörper an einer äußeren Mantelfläche mindestens zwei nebeneinander angeordnete Dichtlippen, die gemeinsam eine äußere Ringnut begrenzen. Dies erhöht abermals die Schalldämmung und die Wasserundurchlässigkeit an der äußeren Mantelfläche im eingebauten Zustand der Leitungsdurchführung.

Die Erfindung vorteilhaft ausgestaltend ist es vorgesehen, dass der Grundkörper nach dem Prinzip eines Nut-Feder-Systems an mindestens einer Außenseite einen gegenüber einer jeweiligen Seitenfläche des Grundkörpers vorstehenden Federabschnitt aufweist. Der Federabschnitt kann dazu genutzt werden, die Leitungsdurchführung an einem Raumbegrenzungselement zu befestigen oder aber zwei Leitungsdurchführungen miteinander zu verbinden. Diese Ausgestaltung ist besonders von Vorteil, wenn der Grundkörper eine kubische Form mit insgesamt vier Außenseiten aufweist.

Im Hinblick auf den vorstehenden Federabschnitt ist es ferner besonders vorteilhaft, wenn der Grundkörper nach dem Prinzip eines Nut-Feder-Systems an mindestens einer Außenseite einen gegenüber einer jeweiligen Seitenfläche rückspringenden Nutabschnitt aufweist. Vorteilhafterweise korrespondieren Federabschnitt und Nutabschnitt derart miteinander, dass es möglich ist, zwei gleichartig aufgebaute Leitungsdurchführungen miteinander zu koppeln, indem der Federabschnitt einer ersten Leitungsdurchführung in den Nutabschnitt der zweiten Leitungsdurchführung gesteckt wird und dort passgenau dichtend eingreift. Selbstverständlich ist es auch möglich mehr als zwei Leitungsdurchführungen auf diese Art zu koppeln.

Das Nut-Feder-System weiter vorteilhaft ausgestaltend kann es vorgesehen sein, dass der mindestens eine Federabschnitt und der mindestens eine Nutabschnitt sich in einer gemeinsamen Nut-Feder-Ebene erstrecken.

Ferner weist der Grundkörper gemäß einer vorteilhaften Weiterbildung der Erfindung eine kubische Grundform auf, wobei der Grundkörper an einer Außenseite einen Federabschnitt und an den drei übrigen Außenseiten jeweils einen Nutabschnitt aufweist. Somit weist die erfindungsgemäße Leitungsdurchführung an zwei sich gegenüberliegenden Seiten Nutabschnitte auf, die vorteilhafterweise dazu dienen können, die Leitungsdurchführungen in Aussparungen einer Wandung zu fixieren, indem die Aussparung begrenzende Wandabschnitte in die Nutabschnitte der Leitungsdurchführung eingreifen. Weist die Aussparung der Wandung einen offenen Endabschnitt auf, kann der erfindungsgemäße Grundkörper komfortabel von dem offenen Endabschnitt her in die Aussparung eingeschoben werden, wobei die zwei sich gegenüberliegenden Nutabschnitte Abschnitte der Wandung umgreifen. Ferner ist es mit dieser erfindungsgemäßen Ausführungsform möglich, an dem Grundkörper eine zweite gleichartige Leitungsdurchführung anzuordnen, die mit ihrem dem Federabschnitt gegenüberliegenden Nutabschnitt mit dem Federabschnitt der ersten Leitungsdurchführung in Eingriff gebracht wird. So ist es möglich, eine Reihe von mehreren gleichartigen Leitungsdurchführungen in Reihe hintereinander anzuordnen, wobei vorteilhafterweise umlaufend ein zumindest im Wesentlichen luftundurchlässiger Abschluss erreicht wird.

Des Weiteren ist es gemäß einer Ausgestaltung der Erfindung vorteilhaft, wenn die Längsachse der Ausnehmung senkrecht zu der Nut-Feder-Ebene orientiert ist, da somit keine Kollision zwischen der Leitung und gegebenenfalls benachbarten weiteren Leitungsdurchführungen möglich ist.

Gemäß einer besonders vorteilhaften Weiterbildung läuft die mindestens eine Dichtlippe in der Nut-Feder-Ebene, sodass die Dichtlippe dem mindestens einen Nutabschnitt zugeordnet ist. Besitzt der Grundkörper an den drei Außenseiten, an denen kein Federabschnitt angeordnet ist, jeweils einen Nutabschnitt, verläuft die Dichtlippe vorteilhafterweise U-förmig in allen drei Nutabschnitten. Der Federabschnitt bleibt vorzugsweise zumindest an seiner radial außenseitigen Oberseite frei von einer Dichtlippe. Auf diese Weise ist an den drei Außenseiten, an denen die Nutabschnitte ausgebildet sind, eine Abdichtung der Leitungsdurchführung im Hinblick zumindest auf Schall, vorzugsweise ferner auf Wasser, im eingebauten Zustand gegeben. An der Seite mit dem Federabschnitt sorgt der Eingriff des Federabschnitts mit einem jeweils benachbarten Nutabschnitt für eine schalldämmende und vorzugsweise wasserabweisende Abdichtung. Dieser Eingriff kann sowohl mit einem Nutabschnitt einer benachbarten Leitungsdurchführung als auch mit einem entsprechenden Abschnitt einer Wandung ausgebildet sein.

Die Ausnehmung betreffend ist es vorzugsweise vorgesehen, dass diese einen kreisförmigen Querschnitt aufweist. Dies erweist sich bei der Führung von Leitungen oder Wellrohren als besonders praktisch.

Eine weitere vorzugsweise Ausgestaltung der erfindungsgemäßen Leitungsdurchführung sieht vor, dass der Grundkörper einstückig ausgebildet ist. Somit ist ein versehentliches Verrutschen von Bestandteilen des Grundköpers nicht möglich. Auch kann der Grundkörper als Einzelteil verbaut werden ohne im Vorhinein noch Bestandteile zusammenfügen zu müssen.

In Bezug auf eine Kabine einer landwirtschaftlichen Arbeitsmaschine, umfassend einen von Raumbegrenzungselementen räumlich eingefassten Innenraum, sowie mindestens einen Fahrersitz, wird die zugrunde liegende Aufgabe dadurch gelöst, dass mindestens ein Raumbegrenzungselement derart mit mindestens einer Leitungsdurchführung gemäß der vorstehenden Beschreibung ausgestattet ist, dass mindestens eine Leitung von einem Außenbereich der Kabine durch die Ausnehmung der Leitungsdurchführung hindurch in den Innenraum führbar ist. Die im Vorstehenden ausgeführten Vorteile im Hinblick auf die erfindungsgemäße Leitungsdurchführung lassen sich analog auf die vorerwähnte Kabine übertragen. Insbesondere bietet die Leitungsdurchführung gegenüber dem Stand der Technik eine bessere Abschottung des Innenraums der Kabine von Schallquellen, die im Außenbereich wirken. Ebenfalls kann ein besonders guter Schutz gegen Wasser erreicht werden.

In einer vorteilhaften Weiterbildung der Kabine umfasst die Leitung mindestens ein äußeres Wellrohr, dessen äußeres Wellprofil zumindest luftdicht und/oder wasserdicht mit den Innenrippen des Grundkörpers eingreift. Auch hier treffen die im Vorstehenden gemachten Vorteilsangeben für die Führung der Leitung in einem Wellrohr analog zu.

Die Erfindung ist nachstehend anhand eines Ausführungsbeispiels, das in den Figuren dargestellt ist, näher erläutert. Es zeigt:
- Fig. 1:: Eine Seitenansicht einer landwirtschaftlichen Arbeitsmaschine mit einer ersten erfindungsgemäßen Leitungsdurchführung,
- Fig. 2:: Ein Raumbegrenzungselement der Arbeitsmaschine aus Figur 1 mit der erfindungsgemäßen Leitungsdurchführung,
- Fig. 3:: Eine dreidimensionale Ansicht der erfindungsgemäßen Leitungsdurchführung aus Figur 2,
- Fig. 4:: Einen Horizontalschnitt der Leitungsdurchführung aus Figur 3,
- Fig. 5:: Eine Frontansicht auf die Leitungsdurchführung aus Figur 3,
- Fig. 6:: Eine dreidimensionale Ansicht einer zweiten erfindungsgemäßen Leitungsdurchführung,
- Fig. 7:: Eine Draufsicht auf zwei gekoppelte Leitungsdurchführungen gemäß Figur 6,
- Fig. 8:: Eine dreidimensionale Ansicht der Leitungsdurchführungen aus Figur 7,
- Fig. 9:: Eine dreidimensionale Ansicht von in einem Raumbegrenzungselement angeordneten erfindungsgemäßen Leitungsdurchführungen,
- Fig. 10:: Ein dreidimensionaler Schnitt durch eine dritte erfindungsgemäße Leitungsdurchführung und
- Fig. 11:: Ein dreidimensionaler Schnitt durch nebeneinander angeordnete Leitungsdurchführungen gemäß Anspruch 10.

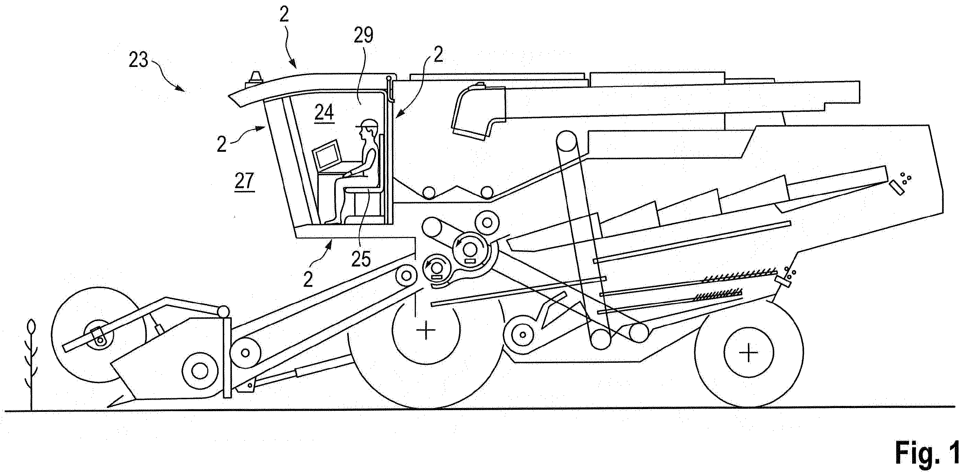

Die **Figuren 1 bis 5** zeigen ein erstes Ausführungsbeispiel für eine erfindungsgemäße Leitungsdurchführung **1** zur Führung einer Leitung **26** durch ein Raumbegrenzungselement **2**, wobei das die Leitungsdurchführung **1** umfassende Raumbegrenzungselement **2** von einer Rückwand einer Kabine **29** einer landwirtschaftlichen Arbeitsmaschine **23** gebildet ist. Ein mit einem Fahrersitz **25** ausgestatteter Innenraum **24** der Kabine **29** wird von Raumbegrenzungselementen **2** eingefasst, wobei Leitungen **26** von einem Außenbereich **27** der Kabine **29** durch jeweils eine Leitungsdurchführung **1** hindurch in den Innenraum **24** geführt werden. Die Leitungen **26** werden jeweils von einem Wellrohr mit einem äußeren Wellprofil **28** umgeben.

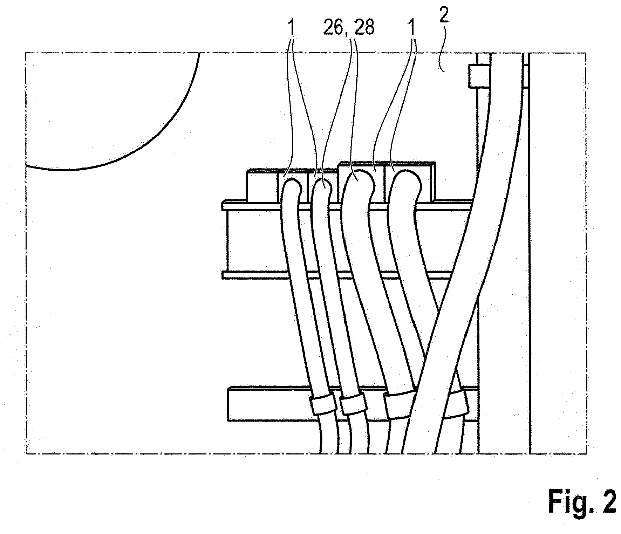

Die Leitungsdurchführung **1** besitzt einen Grundkörper **3**, der von einer Ausnehmung **4** durchdrungen ist. Eine an einer zur Ausnehmung **4** weisende innere Mantelfläche **5** des Grundkörpers **3** weist vier radial nach innen vorstehende Innenrippen **7** auf, die umlaufend verlaufen. Die Innenrippen **7** sind - in Richtung einer Längsachse **6** der Ausnehmung **4** betrachtet - hintereinander angeordnet. Jeweils zwei benachbarte Innenrippen **7** begrenzen dabei eine innere Ringnut **8**, wobei im vorliegenden Ausführungsbeispiel drei innere Ringnuten **8** vorliegen. Selbstverständlich ist die Anzahl der Innenrippen **7** variabel und es können Leitungsdurchführungen **1** mit beispielsweise zwei, drei oder fünf Innenrippen **7** ausgestattet sein, wobei sich dann die Anzahl der inneren Ringnuten **8** entsprechend verändert. Die Abmessungen der Innenrippen **7** und inneren Ringnuten **8** sind jeweils so an das äußere Wellprofil **28** der verschiedenen Wellrohre **(****Figur 2**) angepasst, dass das äußere Wellprofil **28** mit Hochbereichen in die inneren Ringnuten **8** eingreift, so dass eine schallisolierende und wasserundurchlässige Verbindung vorliegt.

Der Grundkörper **3** ist einstückig ausgebildet und besteht hier aus Polyethylen. Ferner weist der Grundkörper **3** an einer Außenseite **12** einen gegenüber der zugehörigen Seitenfläche **13** des Grundkörpers **3** vorstehenden Federabschnitt **14** auf. An den übrigen drei Außenseiten **15**, **16**, **17** weist der Grundkörper **3** einen gegenüber den zugehörigen Seitenflächen **18** rückspringenden Nutabschnitt **19**, **20**, **21** auf. Federabschnitt **14** und Nutabschnitte **19**, **20**, **21** erstrecken sich in einer gemeinsamen Nut-Feder-Ebene **22** und sind nach dem Prinzip eines Nut-Federsystems aufgebaut, so dass der Federabschnitt **14** eines ersten Grundkörpers **3** in einen Nutabschnitt **20** eines zweiten Grundkörpers **3** eingreifen kann. Auf diese Weise kann eine Mehrzahl von Leitungsdurchführungen **1** miteinander gekoppelt werden.

Schließlich weist der Grundkörper **3** gemäß dem ersten Ausführungsbeispiel an einer äußeren Mantelfläche **9** an den drei Seitenflächen **18** mit den Nutabschnitten **19**, **20**, **21** eine radial nach außen vorstehende Dichtlippe **10** auf, die sich innerhalb der Nut-Feder-Ebene **22** erstreckt. Demnach verläuft die Dichtlippe **10** entlang der rückspringenden Nutabschnitte **19**, **20**, **21**, jeweils mittig am Nutboden. Insgesamt verläuft die Dichtlippe **10** U-förmig und endet an einer radial außenseitigen Oberseite des Federabschnitts **14**, wobei besagte Oberseite des Federabschnitts **14** als solche frei von einer Dichtlippe ist.

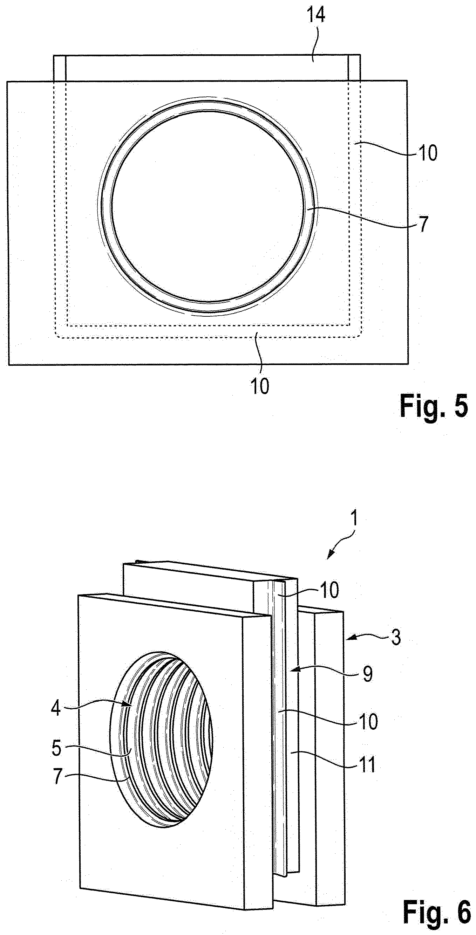

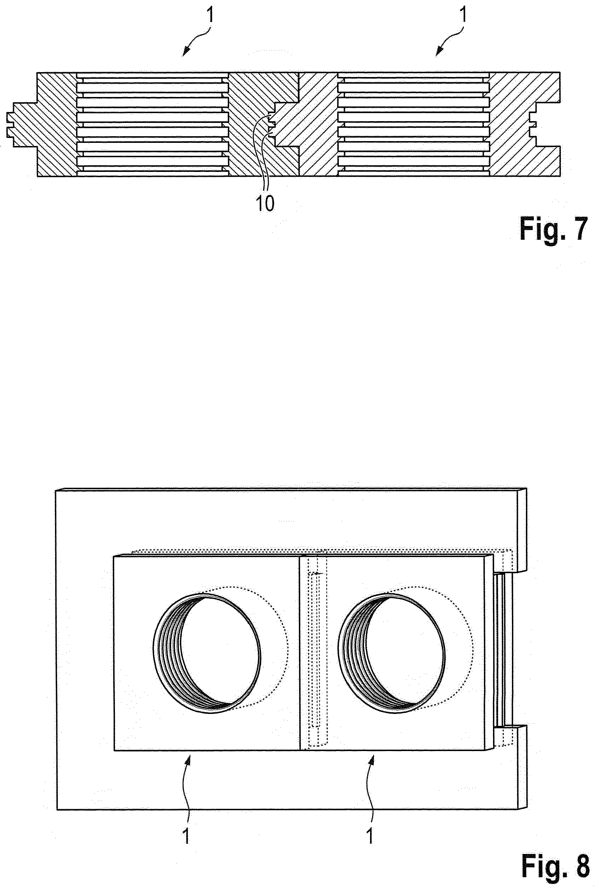

Die **Figuren 6 bis 8** zeigen ein zweites Ausführungsbeispiel für eine erfindungsgemäße Leitungsdurchführung **1**, wobei sich die Leitungsdurchführung 1 gemäß den **Figuren 6 bis 8** insofern von der Leitungsdurchführung **1** gemäß den **Figuren 1 bis 5** unterscheidet, dass sie an der äußeren Mantelfläche **9** über zwei radial nach außen vorstehende Dichtlippen **10** verfügt. Dabei begrenzen die beiden Dichtlippen **10** eine äußere Ringnut **11.** Abgesehen davon, dass die Leitungsdurchführung **1** an ihrer inneren Mantelfläche **5** am Übergang zu der Ausnehmung **4** sieben Innenrippen **7** aufweist, entspricht der übrige Aufbau der Leitungsdurchführung **1** dem der Leitungsdurchführung **1** nach den **Figuren 1 bis 5**.

Zwei baugleiche Leitungsdurchführungen **1** können miteinander verbunden werden, indem der Federabschnitt **14** einer ersten Leitungsdurchführung **1** in einen der Nutabschnitte **19**, **20**, **21** einer zweiten Leitungsdurchführung **1** gesteckt wird, wobei vorzugsweise die zweite Leitungsdurchführung **1** anstelle einer außen angeordneten Dichtlippe **10** einen korrespondierend zu der Dichtlippe **10** ausgebildeten, in der Nut-Feder-Ebene **22** befindlichen Schlitz aufweist, in den die Dichtlippe **10** der ersten Leitungsdurchführung **1** passgenau einfahren kann. Alternativ kann die Dichtlippe **10** auch einfach an dem Nutboden anliegen, ohne dass ein Schlitz vorhanden ist, so dass baugleiche Leitungsdurchführungen **1** genutzt werden können.

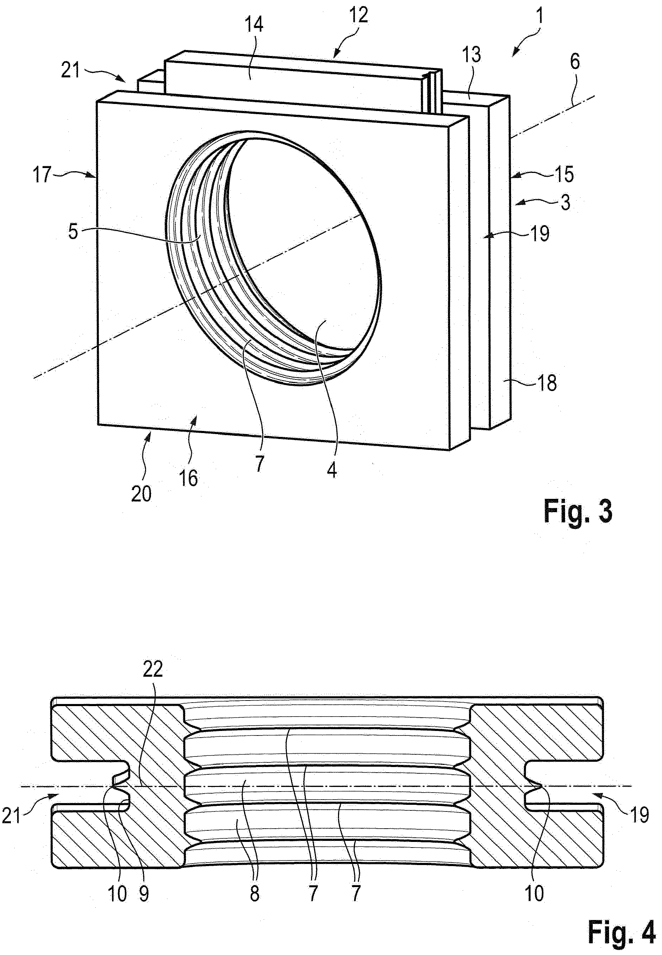

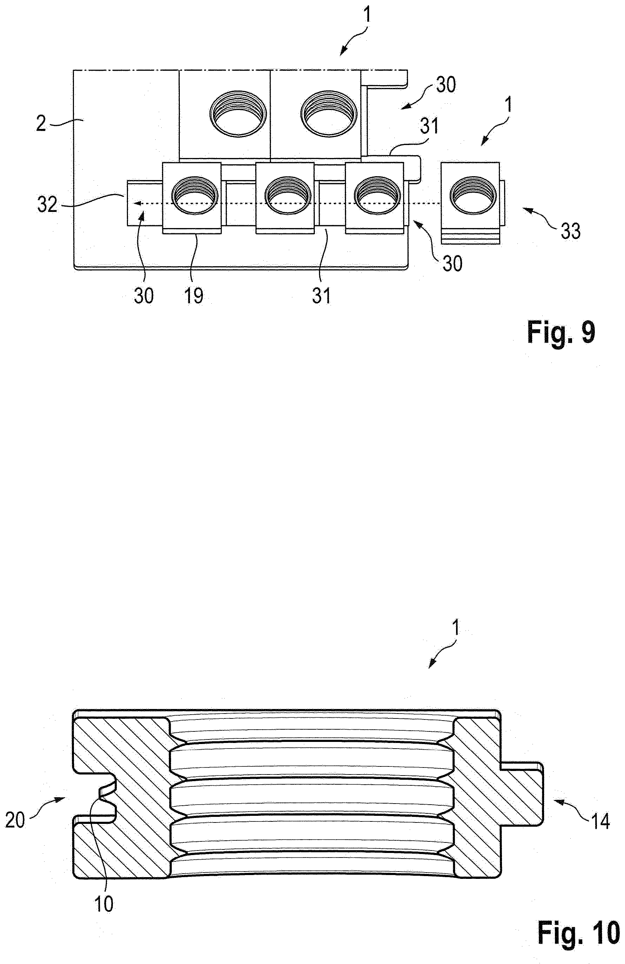

In den **Figuren 9 bis 11** ist ein drittes Beispiel für eine erfindungsgemäße Leitungsdurchführung **1** gezeigt, wobei in der **Figur 9** eine Option für die Anordnung einer Reihe von Leitungsdurchführungen **1** in einem Raumbegrenzungselement **2** veranschaulicht ist. Das Raumbegrenzungselement **2** besitzt zwei langgestreckte Ausschnitte **30** verschiedener Breite, wobei in dem oberen Ausschnitt **30** zwei Leitungsdurchführungen **1** größerer Abmessung und in dem unteren Ausschnitt **30** vier Leitungsdurchführungen **1** kleinerer Abmessung eingesetzt sind. Die Leitungsdurchführungen **1** des unteren Ausschnitts **30** sind in der **Figur 9** noch nicht in ihrer endgültigen Position gezeigt, um das Einschieben der einzelnen Leitungsdurchführungen **1** anzudeuten. Die Leitungsdurchführungen **1** besitzen an drei Seiten Nutabschnitte **19**, **20**, **21** und an einer Seite einen Federabschnitt **14**, analog zu der Leitungsdurchführung **1** gemäß den **Figuren 3 bis 5**. Die einzelnen Leitungsdurchführungen **1** werden so in die vorgesehene Aussparung **30** des Raumbegrenzungselements **2** geschoben, dass die Aussparung **30** begrenzende Wandabschnitte **31** in zwei gegenüberliegende Nutabschnitte **19**, **21** eingreifen. Während die zuerst eingeschobene Leitungsdurchführung **1** bis an ein hinteres Ende der Aussparung **30** geschoben wird, wo der dort befindliche, die Aussparung **30** begrenzende Wandabschnitt **32** in den dritten Nutabschnitt **20** der Leitungsdurchführung **1** eingreift, zeigt der Federabschnitt **14** in die gegenüberliegende Richtung. Die drei weiteren Leitungsdurchführungen **1** werden jeweils analog in die Aussparung **30** des Raumbegrenzungselements **1** geschoben, wobei der dem Federabschnitt **14** gegenüberliegende Nutabschnitt **20** jeweils den Federabschnitt **14** der benachbarten Leitungsdurchführung **1** aufnimmt. Um die offene Seite des Ausschnitts **30** zu verschließen kann eine entsprechende, nicht in den Figuren gezeigte Leiste angeordnet werden.

Auf diese Weise ist es möglich eine Reihe **33** von nebeneinander angeordneten Leitungsdurchführungen **1** vorzusehen, wobei die Anzahl der Leitungsdurchführungen **1** variabel und individuell wählbar ist. In der **Figur 9** sind zwei Reihen **33** verschiedener Leitungsdurchführungen **1** in entsprechend angepassten Aussparungen **30** gezeigt, wobei dieses Beispiel nicht limitierend in Bezug auf die Anzahl der Leitungsdurchführungen **1**, der Reihen **33** an Leitungsdurchführungen **1** oder der Abmessungen der Leitungsdurchführungen **1** verstanden werden soll.

Die Leitungsdurchführungen **1** besitzen analog zu der Leitungsdurchführung **1** gemäß den **Figuren 3 bis 5** jeweils eine Dichtlippe **10** am Nutboden der Nutabschnitte **19, 20, 21,** wobei die Dichtlippe **10** einen dreieckigen Querschnitt besitzt. In der **Figur 10** ist die Ausbildung des Federabschnitts **14** gut zu erkennen, der einen rechteckigen Querschnitt mit abgerundeten Ecken aufweist. Werden zwei gleichartige Leitungsdurchführungen **1** so zusammengefügt, dass der Federabschnitt **14** in den zugeordneten Nutabschnitt **20** gelangt, liegt die Dichtlippe **10** dichtend an dem Nutboden an, was zusätzlich zu einer Verbesserung der Luftundurchlässigkeit und Wasserundurchlässigkeit der erfindungsgemäßen Leitungsdurchführung **1** führt.

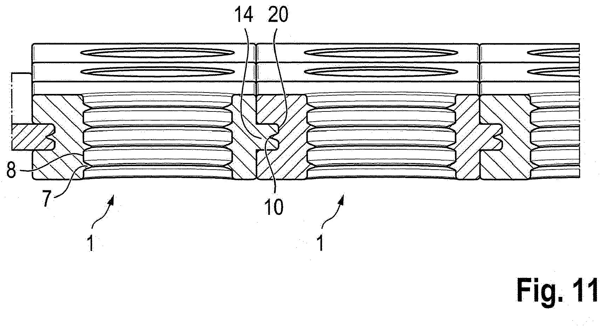

In der **Figur 11** ist die Verformung der Dichtlippe **10** bei Anlage an den Nutboden aus Gründen der besseren Übersichtlichkeit nicht dargestellt, vielmehr ist die Dichtlippe **10** in ihrer "unbelasteten" Form belassen, um sie in der **Figur 11** erkennen zu können.

### Bezugszeichenliste

- 1: Leitungsdurchführung
- 2: Raumbegrenzungselement
- 3: Grundkörper
- 4: Ausnehmung
- 5: Mantelfläche
- 6: Längsachse
- 7: Innenrippe
- 8: Ringnut
- 9: Mantelfläche
- 10: Dichtlippe
- 11: Ringnut
- 12: Außenseite
- 13: Seitenfläche
- 14: Federabschnitt
- 15: Außenseite
- 16: Außenseite
- 17: Außenseite
- 18: Seitenfläche
- 19: Nutabschnitt
- 20: Nutabschnitt
- 21: Nutabschnitt
- 22: Nut-Feder-Ebene
- 23: Arbeitsmaschine
- 24: Innenraum
- 25: Fahrersitz
- 26: Leitung
- 27: Außenbereich
- 28: Wellprofil
- 29: Kabine
- 30: Ausschnitt
- 31: Wandabschnitt
- 32: Wandabschnitt
- 33: Reihe

## Patentansprüche

1. Leitungsdurchführung (1) zur Führung einer Leitung durch ein Raumbegrenzungselement (2), umfassend einen Grundkörper (3),
wobei der Grundkörper (3) von einer Ausnehmung (4) durchdrungen ist, die umlaufend von dem Grundkörper (3) eingefasst ist,
**dadurch gekennzeichnet, dass**
der Grundkörper (3) an einer inneren Mantelfläche (5) am Übergang zur Ausnehmung (4) eine Vielzahl von radial nach innen vorstehenden, umlaufenden, in Richtung einer Längsachse (6) der Ausnehmung (4) in Reihe hintereinander angeordneten Innenrippen (7) aufweist,
wobei jeweils benachbarte Innenrippen (7) gemeinsam eine innere Ringnut (8) begrenzen.

2. Leitungsdurchführung nach Anspruch 1, **dadurch gekennzeichnet, dass** der Grundkörper (3) von einem dauerelastischen Material, insbesondere Weichplastik, gebildet ist, insbesondere von Weich-PVC oder Polyethylen.

3. Leitungsdurchführung nach Anspruch 1 oder 2, **dadurch gekennzeichnet, dass** der Grundkörper (3) an einer äußeren Mantelfläche (9) mindestens eine radial nach außen vorstehende Dichtlippe (10) aufweist.

4. Leitungsdurchführung nach Anspruch 3, **gekennzeichnet durch** mindestens zwei nebeneinander angeordnete Dichtlippen (10), die gemeinsam eine äußere Ringnut (11) begrenzen.

5. Leitungsdurchführung nach mindestens einem der vorangegangenen Ansprüche, **dadurch gekennzeichnet, dass** der Grundkörper (3) nach dem Prinzip eines Nut-Feder-Systems an mindestens einer Außenseite (12) einen gegenüber einer jeweiligen Seitenfläche (13) des Grundkörpers (3) vorstehenden Federabschnitt (14) aufweist.

6. Leitungsdurchführung nach mindestens einem der vorangegangenen Ansprüche, **dadurch gekennzeichnet, dass** der Grundkörper (3) nach dem Prinzip eines Nut-Feder-Systems an mindestens einer Außenseite (15, 16, 17) einen gegenüber einer jeweiligen Seitenfläche (18) rückspringenden Nutabschnitt (19, 20, 21) aufweist.

7. Leitungsdurchführung nach Anspruch 5 oder 6, **dadurch gekennzeichnet, dass** der mindestens eine Federabschnitt (14) und der mindestens eine Nutabschnitt (19, 20, 21) sich in einer gemeinsamen Nut-Feder-Ebene (22) erstrecken.

8. Leitungsdurchführung nach Anspruch 7, **dadurch gekennzeichnet, dass** der Grundkörper (3) eine kubische Grundform aufweist, wobei der Grundkörper (3) an einer Außenseite (12) einen Federabschnitt (14) und an den drei übrigen Außenseiten (15, 16, 17) jeweils einen Nutabschnitt (19, 20, 21) aufweist.

9. Leitungsdurchführung nach Anspruch 7 oder 8, **dadurch gekennzeichnet, dass** die Längsachse (6) der Ausnehmung (4) senkrecht zu der Nut-Feder-Ebene (22) orientiert ist.

10. Leitungsdurchführung nach einem der Ansprüche 3, 4 oder 7 bis 9, **dadurch gekennzeichnet, dass** die mindestens eine Dichtlippe (10) in der Nut-Feder-Ebene (22) an dem Grundkörper (3) angeordnet und dem mindestens einen Nutabschnitt (19, 20, 21), vorzugsweise sämtlichen Nutabschnitten (19, 20, 21), zugeordnet ist.

11. Leitungsdurchführung nach mindestens einem der vorangegangenen Ansprüche, **dadurch gekennzeichnet, dass** die Ausnehmung (4) einen kreisförmigen Querschnitt aufweist.

12. Leitungsdurchführung nach mindestens einem der vorangegangenen Ansprüche, **dadurch gekennzeichnet, dass** der Grundkörper (3) einstückig ausgebildet ist.

13. Kabine (29) einer landwirtschaftlichen Arbeitsmaschine (23), umfassend
- einen von Raumbegrenzungselementen (2) räumlich eingefassten Innenraum (24), sowie
- mindestens einen Fahrersitz (25),
**dadurch gekennzeichnet, dass**
mindestens ein Raumbegrenzungselement (2) derart mit mindestens einer Leitungsdurchführung (1) nach einem der vorhergehenden Ansprüche ausgestattet ist, dass mindestens eine Leitung (26) von einem Außenbereich (27) der Kabine (29) durch die Ausnehmung (4) der Leitungsdurchführung (1) hindurch in den Innenraum (24) führbar ist.

14. Kabine nach Anspruch 13, **dadurch gekennzeichnet, dass** die Leitung (26) mindestens ein äußeres Wellrohr umfasst, dessen äußeres Wellprofil (28) zumindest luftdicht und/oder wasserdicht mit den Innenrippen (7) des Grundkörpers (3) eingreift.
